# EUROPÄISCHE PATENTSCHRIFT

(11) **EP 0 771 976 B1**
(45) Veröffentlichungstag und Bekanntmachung des Hinweises auf die Patenterteilung: **07.02.2001**
(21) Anmeldenummer: 96117236.8
(22) Anmeldetag: 28.10.1996
(51) Int. Cl.: F16K 1/226

(54) **Metallische Dichtung für Absperrventile**
Metallic seal for stop valves
Joint métallique d'étanchéité pour des vannes d'arrêt

(30) Priorität: 30.10.1995 DE 19540410
(43) Veröffentlichungstag der Anmeldung: 07.05.1997
(73) Patentinhaber: Adams Armaturen GmbH, 44653 Herne (DE)
(72) Erfinder: Marbach, Johannes, 46284 Dorsten (DE)
(74) Vertreter: Behrendt, Arne, Dipl.-Ing.

(56) Entgegenhaltungen:
- EP-A- 0 300 613
- DE-A- 2 644 518
- DE-A- 4 339 587
- DE-A- 4 343 562
- FR-A- 2 354 498
- GB-A- 2 264 163
- US-A- 4 147 327
- US-A- 4 296 915

## Beschreibung

Die Erfindung bezieht sich auf eine metallische Dichtung für Absperrklappen gemäß dem Oberbegriff des Anspruchs 1. Eine derartige Dichtung ist aus der US-A- 4296915 bekannt.

Bei Absperrklappen sind metallische Dichtungen, die in einer oder in beiden Strömungsrichtungen wirken, in unterschiedlichen Ausführungen bekannt. Um Leckverluste zu vermeiden, müssen die Dichtelemente mit hoher Genauigkeit hergestellt und in den Aufnahmeraum eingepaßt sein. Die DE-OS 43 43 562 zeigt eine metallische Lamellendichtung, bei der eine aus zwei Ringlamellen gebildete Dichtung, die in beiden Strömungsrichtungen druckunterstützt wird, im Klappengehäuse auswechselbar verspannt ist. Diese Dichtanordnung erfüllt die in sie gesetzten Erwartungen, hat aber den Nachteil, daß sie eine größere Anzahl unterschiedlicher Bauteile benötigt, deren Herstellung zeitaufwendig und kostenintensiv ist. Hier will die Erfindung Abhilfe schaffen.

Der Erfindung liegt dementsprechend die Aufgabe zugrunde, eine metallische Dichtung für Absperrventile zu schaffen, die sich durch ein Minimum an Bauteilen auszeichnet, kostengünstig herstellbar und einfach zu montieren ist. Dabei soll die Dichtung so beschaffen sein, daß sie für Abdichtungen in einer oder beiden Strömungsrichtungen einsetzbar ist.

Ausgehend von einer metallischen Dichtung der eingangs erwähnten Art wird diese Aufgabe erfindungsgemäß dadurch gelöst, daß der Tragring mit dem Gehäuse oder Klappenscheibe mediumdicht verschweißt ist.

Vorteilhafte Weiterbildungen der Erfindung beziehen sich auf die Anordnung der Dichtung im Gehäuse und sind in den Unteransprüchen beschrieben.

Bei einer solchen Dichtung ist die Dichtlippe auf der Innenseite des Tragringes angeordnet, wobei der Tragring mit seiner äußeren Mantelfläche an einer zylindrischen Innenfläche des Gehäuses anliegt, die von einer radial verlaufenden Ringschulter begrenzt ist.

Nach einer anderen Weiterbildung ist vorgesehen, daß der Befestigungsabschnitt der Ringlamelle an der inneren Stirnfläche des Tragringes anliegt und an seiner Außenseite mit der radialen Ringschulter im Gehäuse in Berührung steht.

Weiterhin ist es zweckmäßig, die innere Mantelfläche des Tragringes so auszubilden, daß sie von der Seite des Befestigungsabschnittes der Dichtlamelle aus einen trichterförmig sich erweiternden Verlauf hat.

Die Dichtlippe kann in ihrer Geometrie unterschiedlich gestaltet sein. Vorteilhaft ist es, die Dichtlippe in an sich bekannter Weise so auszubilden, daß sie in einer axialen Schnittebene einen etwa U-förmig gewölbten Verlauf hat. Dabei ist in der Einbaustellung das freie Ende der abgebogenen Dichtlippe der Strömungsrichtung zugewandt, wodurch die Wirkung der Druckunterstützung der Abdichtung erhöht wird.

Der Hauptvorteil, der durch die Erfindung erzielbar ist, ist darin zu sehen, daß das Dichtungspaket als einbaufertige Einheit lediglich aus einem starren Tragring und wenigstens einer durch Schweißen an diesem befestigten Ringlamelle besteht, daß keinerlei Befestigungsmittel wie Schrauben oder dergleichen benötigt werden und daß eine zusätzliche statische Abdichtung entbehrlich ist. Die mediumdichte Verschweißung des Tragringes mit dem Gehäuse bzw. der Klappenscheibe ist problemlos und kostengünstig durchführbar, weil beim Einbau des Dichtungssatzes nur zwei genau ineinander passende Teile miteinander verschweißt zu werden brauchen.

Ausführungsbeispiele von Dichtungen in Absperrklappen sind in der Zeichnung schematisch dargestellt und werden nachfolgend näher erläutert. Es zeigen:
- Fig. 1: einen Ausschnitt eines Axialschnittes einer Absperrklappe mit im Gehäuse angeordneter Ringlamelle mit einem durch einen Schrumpfvorgang mediumdicht verspannten Tragring.
- Fig. 2: einen Ausschnitt eines Axialschnittes einer Absperrklappe mit im Gehäuse angeordneter Ringlamelle in einer erfindungsgemäßen Ausführungsform mit einem mediumdicht verschweißten Tragring.

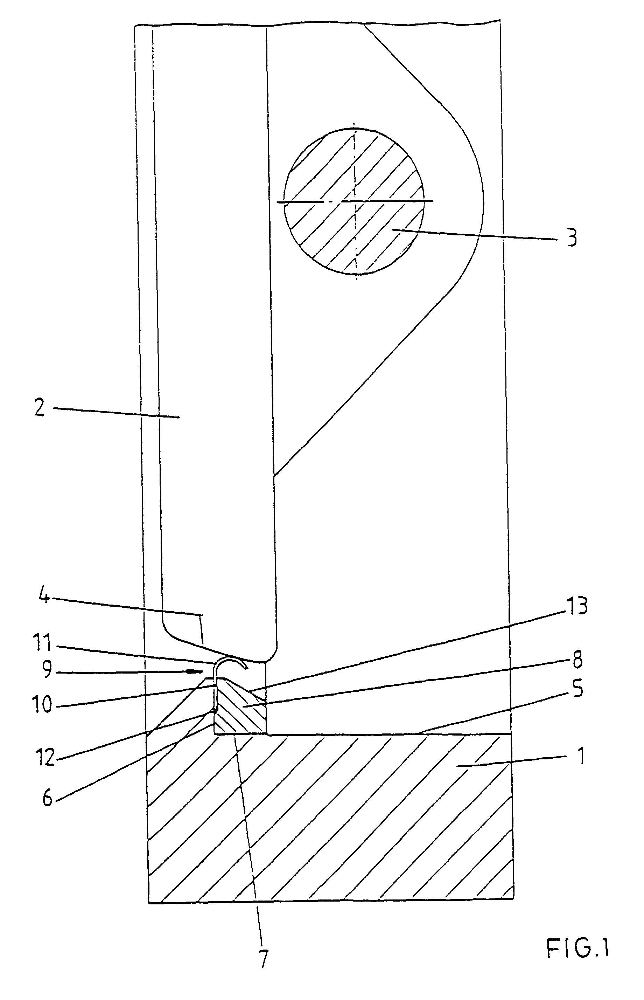

Figur 1 zeigt als Ausschnitt den Umfangsbereich eines Gehäuses 1 eines Klappenventils und den Randbereich einer drehbeweglichen Klappenscheibe 2 in der Schließstellung. Dabei ist die Klappenscheibe 2 drehfest auf einer Welle 3 angeordnet, die an ihren Enden im Gehäuse 1 drehbar gelagert ist.

Die starre Sitzfläche 4 der Klappenscheibe 2 ist als umlaufende Konusfläche ausgebildet. Bei der dargestellten Ausführungsform schwingt die Klappenscheibe 2 durch eine Drehung im Uhrzeigersinn in die Schließstellung ein.

Im Gehäuse 1 ist im Bereich der Abdichtung an der zylindrischen Innenwandung 5 eine radial nach innen sich erstreckende Ringschulter 6 angeformt. Der Ringschulter 6 vorgelagert ist eine Ringfläche 7, deren Innendurchmesser kleiner ist als der Innendurchmesser des Gehäuses 1.

Das Dichtungspaket besteht aus einem starren Tragring 8 und einer an seiner inneren Stirnseite durch Schweißen befestigten Ringlamelle 9 aus verhältnismäßig dünnwandigem Metall. Die Ringlamelle setzt sich zusammen aus einem radialen ebenen Befestigungsabschnitt 10 und einer von diesem ausgehenden Dichtlippe 11 mit einem etwa U-förmig gewölbten Verlauf. Die Dichtlippe 11 steht federnd mit dem Befestigungsabschnitt 10 in Verbindung und liegt in der Schließstellung des Klappenventils unter elastischer Vorspannung mediumdicht an der starren Sitzfläche 4 an. Der Mediumdruck auf der Anströmseite wirkt dabei im Sinne einer Unterstützung des Andruckes der Dichtlippe 11.

Der an dem starren Tragring 8 flächig anliegende Befestigungsabschnitt 10 ist an seinem freien Ende durch eine umlaufende Schweißverbindung 12 mit dem Tragring 8 mediumdicht verbunden. Zur Erzielung einer durchgehenden ebenen Anlagefläche ist der Tragring an der inneren Stirnseite mit einer umlaufenden Vertiefung versehen, deren axiale Tiefe der Dicke des Befestigungsabschnitts 10 entspricht. An der Innenseite ist der Tragring 8 ganz oder teilweise als Konusfläche 13 ausgebildet, die sich zum freien Ende hin erweitert.

Das Einpassen des Tragrings in den Einbauraum wird in an sich bekannter Weise durch einen Schrumpfvorgang bewirkt. Zu diesem Zweck ist der Tragring 8 in seinem Zustand vor dem Einbau so dimensioniert, daß der Außendurchmesser geringfügig größer ist als der Innendurchmesser des Gehäuses 1 im Bereich der Aufnahmefläche 7. Durch vorübergehendes Abkühlen des Tragringes 8 wird durch Schrumpfen eine solche Verringerung des Außendurchmessers herbeigeführt, daß der Tragring auf die Ringfläche 7 aufschiebbar ist. Wenn sich anschließend der Tragring wieder auf die Umgebungstemperatur erwärmt, versucht er, sich auf seinen Ausgangszustand auszudehnen. Da dies jedoch nicht möglich ist, bleibt ein Spannungszustand erhalten, der eine radiale Anpressung des Tragringes 8 gegen die Ringfläche 7 bewirkt.

Sofern das Klappenventil während des Betriebs hohen Temperaturen durch das Strömungsmedium ausgesetzt ist, wird durch den Temperaturanstieg der Schrumpfsitz des Tragringes 8 zusätzlich verstärkt.

Ein Vorteil dieser Dichtung ist darin zu sehen, daß sie für ihren Zusammenhalt bzw. ihre Befestigung keine lösbaren Teile benötigt, so daß keinerlei Gefahr besteht, daß durch sich lösende Teile Beschädigungen und gegebenenfalls Betriebsunterbrechungen hervorgerufen werden.

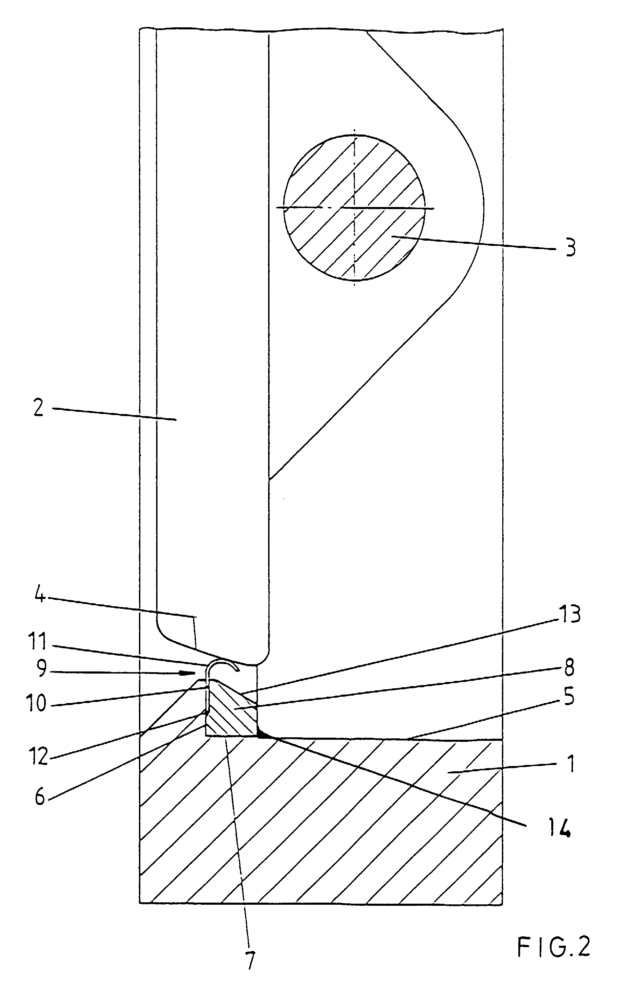

Die in Figur 2 dargestellte Ausführungsform der Erfindung entspricht weitestgehend der Ausführungsform gemäß Figur 1, so daß für die einander entsprechenden Teile die gleichen Bezugsziffern verwendet werden konnten. Hier sind jedoch erfindungsgemäß und abweichend von Figur 1 der Tragring 8 und das Gehäuse 1 durch eine Schweißnaht 14 mediumdicht miteinander verschweißt.

## Patentansprüche

1. Metallische Dichtung für Absperrklappen für Rohrleitungen für strömende Medien mit wenigstens einer metallischen Ringlamelle (9), die im Gehäuse (1) oder an der Klappenscheibe (2) angeordnet ist, wobei die Ringlamelle einen radialen ebenen Ring (10) zur Befestigung und eine von diesem ausgehende Dichtlippe (11) aufweist, die in der Schließstellung der Absperrklappe an einer metallischen Sitzfläche (4) dichtend anliegt, wobei der Befestigungsabschnitt der Ringlamelle an seiner von der Dichtlippe abgewandten Ringkante durch Verschweißen an einem starren Tragring (8) befestigt ist, **dadurch gekennzeichnet,** daß der Tragring (8) mit dem Gehäuse (1) oder der Klappenscheibe mediumdicht verschweißt ist.

2. Dichtung nach Anspruch 1, dadurch gekennzeichnet, daß die Ringlamelle im Gehäuse (1) angeordnet ist, daß die Dichtlippe (11) im Innern des Tragringes (8) verläuft und daß der Tragring (8) mit seiner äußeren Mantelfläche an einer zylindrischen Innenfläche (7) des Gehäuses (1) anliegt, die von einer radial verlaufenden Ringschulter (6) begrenzt ist.

3. Dichtung nach Anspruch 2, dadurch gekennzeichnet, daß der Befestigungsabschnitt (10) der Ringlamelle (9) an der inneren Stirnfläche des Tragrings (8) anliegt und an seiner Außenseite mit der radialen Ringschulter (6) im Gehäuse (1) in Berührung steht.

4. Dichtung nach Anspruch 2 oder 3, dadurch gekennzeichnet, daß die Dichtlippe (11) in einer axialen Schnittebene einen etwa U-förmig gewölbten Verlauf hat.

5. Dichtung nach einem der Ansprüche 2 bis 4, dadurch gekennzeichnet, daß die innere Mantelfläche (13) des Tragringes (8) von der Seite des Befestigungsabschnitts (10) der Ringlamelle (9) aus einen trichterförmig sich erweiternden Verlauf hat.

## Claims

1. A metal seal for closure flaps for conduits for flowing media comprising at least one annular metal blade (9) which is arranged in the housing (1) or on the flap disc (2), wherein the annular blade has a radial flat ring (10) for fixing purposes and a sealing lip (11) which extends therefrom and which in the closed position of the closure flap bears sealingly against a metal seat surface (4), wherein at its ring edge remote from the sealing lip the fixing portion of the annular blade is fixed by welding to a rigid support ring (8), characterised in that the support ring (8) is welded to the housing (1) or the flap disc in sealing relationship in respect of the medium.

2. A seal according to claim 1 characterised in that the annular blade is arranged in the housing (1), the sealing lip (11) extends in the interior of the support ring (8), and the support ring (8) bears with its external peripheral surface against a cylindrical internal surface (7) of the housing (1), which is delimited by a radially extending annular shoulder (6).

3. A seal according to claim 2 characterised in that the fixing portion (10) of the annular blade (9) bears against the internal end face of the support ring (8) and at its outside is in contact with the radial annular shoulder (6) in the housing (1).

4. A seal according to claim 2 or claim 3 characterised in that in an axial section plane the sealing lip (11) is of a configuration which is curved substantially in a U-shape.

5. A seal according to one of claims 2 to 4 characterised in that the internal peripheral surface (13) of the support ring (8) is of a configuration which enlarges in a funnel shape from the side of the fixing portion (10) of the annular blade (9).

## Revendications

1. Garniture d'étanchéité métallique pour des clapets d'arrêt pour des conduites pour des milieux d'écoulement avec au moins une lamelle annulaire métallique (9) qui est disposée dans le boîtier (1) ou au disque de clapet (2), où la lamelle annulaire présente une bague radiale plane (10) pour la fixation et une lèvre d'étanchéité (11) partant de celle-ci qui, en position de fermeture du clapet d'arrêt, s'applique d'une manière étanche à une face de siège métallique (4), où le tronçon de fixation de la lamelle annulaire est fixé à son bord annulaire éloigné de la lèvre d'étanchéité par soudage à une bague de support rigide (8), caractérisée en ce que la bague de support (8) est soudée avec le boîtier (1) ou le disque de clapet d'une manière étanche au milieu.

2. Garniture d'étanchéité selon la revendication 1, caractérisée en ce que la lamelle annulaire est disposée dans le boîtier (1), en ce que la lèvre d'étanchéité (11) s'étend à l'intérieur de la bague de support (8) et en ce que la bague de support (8) s'applique avec sa face d'enveloppe extérieure à une face intérieure cylindrique (7) du boîtier (1) qui est délimitée par un épaulement annulaire (6) s'étendant radialement.

3. Garniture d'étanchéité selon la revendication 2, caractérisée en ce que le tronçon de fixation (10) de la lamelle annulaire (9) s'applique à la face frontale intérieure de la bague de support (8) et est en contact à son côté extérieur avec l'épaulement annulaire radial (6) dans le boîtier (1).

4. Garniture d'étanchéité selon la revendication 2 ou 3, caractérisée en ce que la lèvre d'étanchéité (11), dans un plan de coupe axial, a une allure bombée à peu près en forme de U.

5. Garniture d'étanchéité selon l'une des revendications 2 à 4, caractérisée en ce que la face d'enveloppe intérieure (13) de la bague de support (8), à partir du côté du tronçon de fixation (10) de la lamelle annulaire (9), a une allure s'élargissant en forme d'entonnoir.
